# EUROPÄISCHE PATENTSCHRIFT

(11) **EP 1 837 111 B1**
(45) Veröffentlichungstag und Bekanntmachung des Hinweises auf die Patenterteilung: **09.09.2009**
(21) Anmeldenummer: 07004295.7
(22) Anmeldetag: 02.03.2007
(51) Int. Cl.: B23D 79/00, B23D 79/02, F16K 1/46

(54) **Thermische Entgratanlage mit Schnellentlüftung**
Thermal deburring installation with rapid ventilation
Installation d'ébarbage thermique dotée d'une ventilation rapide

(30) Priorität: 24.03.2006 DE 102006013667
(43) Veröffentlichungstag der Anmeldung: 26.09.2007
(73) Patentinhaber: ROBERT BOSCH GMBH, 70469 Stuttgart (DE)
(72) Erfinder: Conrad, Hans-Jürgen, 71292 Friolzheim (DE)
(74) Vertreter: Maiß, Harald

(56) Entgegenhaltungen:
- EP-A- 1 232 821
- EP-A- 1 232 822
- WO-A-01/27507
- WO-A-87/02113
- GB-A- 1 447 725
- GB-A- 2 343 498
- US-A- 4 015 815
- US-A1- 2002 195 147

## Beschreibung

Die Erfindung betrifft eine thermische Entgratanlage mit Schnellentlüftung gemäß dem Oberbegriff von Anspruch 1.

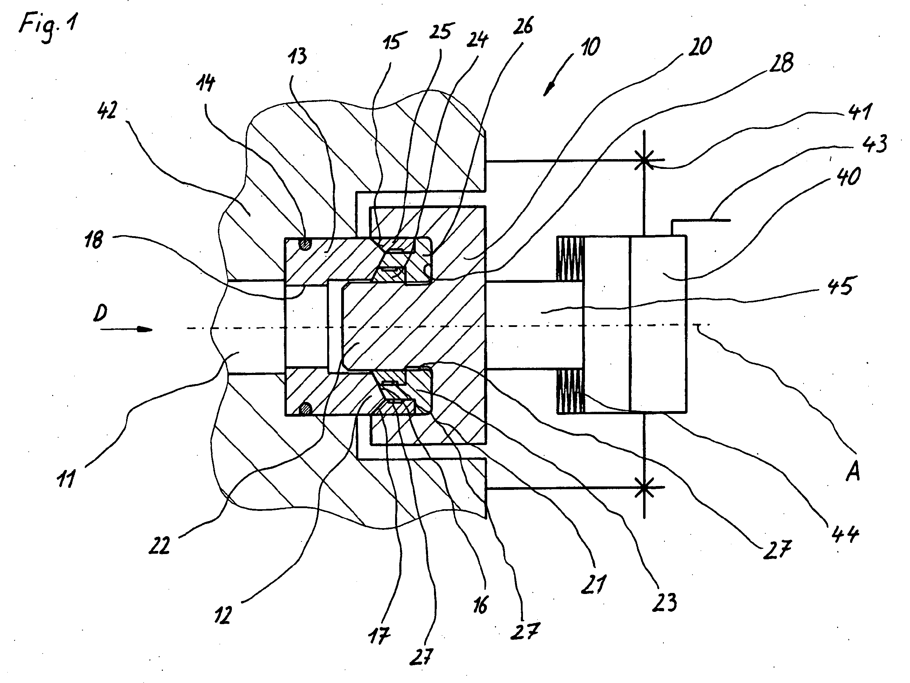

Eine derartige thermische Entgratanlage ist aus der EP 1 232 822 A1 bekannt. Dort ist in Fig. 1 eine thermische Entgratanlage mit einer Entgratkammer 2 gezeigt, die über einen Entlüftungsdurchgang 22 mit der Umgebung verbunden ist, und zwar über die Absaugung 23. Der Entlüftungsdurchgang 22 ist mit einem Entlüftungsventil 21 verschließbar. Eine derartige Schnellentlüftung dient zum kontrollierten Ablassen der unter hohem Druck stehenden Verbrennungsgase nach der Explosion der Brenngase, die die Entgratung der in die Entgratkammer 2 eingebrachten Werkstücke 3 bewirkt.

Eine Ausführungsform des Entlüftungsventils 21 ist in der Fig. 5 der EP 1 232 822 A1 näher dargestellt. Es umfasst einen Ventilsitz 28 der fest mit der Entgratkammer 2 verbunden ist und einen in Richtung des Entlüftungsdurchgangs 15 beweglichen Ventilstößel 25. Die Dichtung 26 ist am Ventilsitz angebracht.

Dieses Entlüftungsventil hat den Nachteil, dass die Zuhaltekraft des Ventilstößels während der Explosion, also die Kraft, die notwendig ist, um den Ventilstößel so gegen den Ventilsitz zu drücken, dass keine Verbrennungsgase entweichen können, sehr hoch ist.

Es ist daher Aufgabe der Erfindung, die Zuhaltekraft zu reduzieren, ohne den Strömungswiderstand des Entlüftungsdurchgangs zu erhöhen. Diese Aufgabe wird durch die Merkmale des Anspruchs 1 gelöst.

Durch diese Merkmale wird erreicht, dass das Entlüftungsventil im Wesentlichen denselben Strömungsquerschnitt für die Explosionsabgase aufweist wie der Entlüftungsdurchgang und somit nicht als Drosselstelle wirkt, die eine schnelle Abfuhr der Verbrennungsgase behindert. Die Taktzeit der thermischen Entgratanlage ist entsprechend kurz.

Dieser Lösung liegt die Erkenntnis zugrunde, dass die Zuhaltekraft neben dem Explosionsdruck nur vom Innendurchmesser der Dichtung abhängig ist, da dieser die Fläche definiert, auf den der Explosionsdruck einwirkt. Gemäß der EP 1 232 822 A1 ist die Dichtung um den Entlüftungsdurchgang angeordnet, weshalb deren Innendurchmesser wesentlich größer als der Innendurchmesser des Entlüftungsdurchgangs sein muss. Beim erfindungsgemäßen Entlüftungsventil kann der Innendurchmesser der Dichtung demgegenüber reduziert werden, ohne den Innendurchmesser des Entlüftungsdurchgangs zu verändern.

Es kann vorgesehen sein, dass der Ventilstößel von einem Aktuator vorzugsweise einem einfach wirkenden Fluidzylinder antreibbar ist, wobei der Verbund aus Ventilstößel und Aktuator lösbar mit der Entgratkammer verbunden ist, vorzugsweise mittels eines Bajonettverschlusses. Auf diese Weise kann die Wartung des Entlüftungsventils vereinfacht werden, weil der Ventilsitz und der Ventilstößel vollständig voneinander getrennt werden können, so dass die Dichtung und die Dichtfläche des Ventilsitzes frei zugänglich sind. Die zuletzt genannten Teile unterliegen einem besonders hohen Verschleiß, weil sie dem Explosionsdruck ausgesetzt sind. Sie müssen daher regelmäßig erneuert werden.

Die bevorzugte Ausgestaltung der lösbaren Verbindung als Bajonettverschluss, also einer Verbindung, bei der zur Montage zuerst eine gradlinige Fügebewegung in Richtung der Entlüftungsventilachse und anschließend eine drehende Verriegelungsbewegung um die Entlüftungsventilachse ausgeführt wird, hat den Vorteil, dass die Montage bzw. Demontage des Verbundes aus Ventilstößel und Aktuator besonders einfach und schnell geht. Weiter hat ein Bajonettverschluss den Vorteil, dass die Fügeflächen, die den Explosionskräften Stand halten müssen, sehr groß ausgeführt werden können. Es kann eine Rastverbindung vorgesehen sein, die den Bajonettverschluss in der verriegelten Stellung sichert, so dass ein unbeabsichtigtes Öffnen ausgeschlossen ist.

Die bevorzugte Ausführungsform des Aktuators als einfach wirkender Fluidzylinder insbesondere als Kurzhubzylinder hat den Vorteil, dass sie in Richtung der Entlüftungsventilachse sehr kurz ausgeführt werden kann, so dass der Verbund aus Ventilstößel und Aktuator während der Wartung leicht handhabbar ist. Als Antriebsfluid kommen Druckluft oder Hydraulikflüssigkeit in Betracht, wobei Druckluft üblicherweise kostengünstiger ist.

Weiter kann die Dichtung von einem inneren Ring, einem äußeren Ring und einem verformbaren Ringkern gebildet sein, die in einer angepassten Ausnehmung des Ventilstößels, aufgenommen sind, wobei die beiden Ringe so in Kontakt mit dem zugeordneten Ventilsitz bringbar sind, dass der verformbare Ringkern allseitig mit Druck beaufschlagt ist. Diese Ausführungsform wird grundsätzlich von der EP 1 232 822 A1 nahe gelegt. Eine derartige Dichtung hat den Nachteil, dass sie sich sehr leicht aus der angepassten Ausnehmung lösen kann, weil sie dort nur durch Reibkräfte gehalten wird. Hierbei ist besonders zu berücksichtigen, dass es sich bei dem verformbaren Ringkern vorzugsweise um einen PTFE-Ring handelt, der sich nur unter den relativ hohen Anpresskräften verformt und bei der anschließenden Entlastung teilweise elastisch zurückfedert, so dass sich zwischen Dichtung und Ausnehmung Spalte ergeben können. Dieses Problem ist besonders gravierend, wenn die Dichtung an einem beweglichen Teil wie dem Ventilstößel angeordnet ist oder wenn die Dichtung aufgrund ihres Eigengewichts aus der angepassten Ausnehmung herausfallen kann.

Zur Beseitigung dieses Nachteils wird vorgeschlagen, dass wenigstens der Ventilstößel eine Verdrängungsausnehmung für den verformbaren Ringkern aufweist. Bei einer derartigen Dichtung wird der verformbare Ringkern unter Einwirkung der Anpressdruckes in die Verdrängungsausnehmungen fließen. Bei der anschließenden Entlastung wird die elastische Rückfederung des verformbaren Ringkerns nicht ausreichen, um den Formschluss zwischen den Dichtungsbauteilen aufzuheben. Die Dichtung ist somit formschlüssig gegen Lösen gesichert. Hierbei ist besonders darauf hinzuweisen, dass die Dichtungsrohteile hinterschneidungsfrei ausgeführt werden können, so dass sie kostengünstig getrennt voneinander gefertigt und anschließend problemlos montiert werden können. Der Formschluss wird erst im Betrieb der thermischen Entgratanlage hergestellt.

Eine derartige Dichtung ist auch an anderen Stellen der thermischen Entgratanlage vorteilhaft zu verwenden, beispielsweise an der Werkstückeinfüllöffnung der Entgratkammer.

Die Verdrängungsausnehmung kann als umlaufende Nut ausgebildet sein, damit sie einfach und kostengünstig mittels einer Drehbearbeitung hergestellt werden kann. Durch eine derartige Verdrängungsausnehmung wird eine Verdrehung der Dichtung zwar nicht verhindert, dies ist aber ohne Belang, da die Dichtung, der Ventilstößel und der Ventilsitz vorzugsweise rotationssymmetrisch zur Entlüftungsventilachse ausgebildet sind, so dass sie in jeder Drehstellung uneingeschränkt funktionstüchtig sind.

Weiter kann der Innendurchmesser des inneren Rings im Wesentlichen gleich dem Innendurchmesser des Entlüftungsdurchgangs sein.

Darüber hinaus kann der Ventilsitz von einem ringförmigen Ventileinsatz gebildet sein, an dessen Stirnfläche eine Dichtfläche vorgesehen ist, die im Längsschnitt betrachtet konvex vorzugsweise spitz zulaufend ausgebildet ist. Die Ausgestaltung des Ventilsitzes als gesonderter Ventileinsatz hat den Vorteil, dass er bei Verschleiß leicht gewechselt werden kann. Darüber hinaus kann er aus einem anderen verschleißfesteren Material hergestellt werden als die übrige Entgratanlage. Die spitz zulaufende Dichtfläche hat den Vorteil, dass sie kostengünstiger herstellbar ist als eine abgeflachte Dichtfläche nach EP 1 232 822 A1 - Fig. 5, weil weniger toleranzbehaftete Längenmaße einzuhalten sind. Die konvexe Form wird benötigt, damit die Ringe der Dichtung gegen die angepasste Ausnehmung gepresst werden, um ein Herausfließen des verformbaren Ringkerns zu vermeiden.

Der Innendurchmesser des Ventileinsatzes kann abschnittsweise kleiner sein als der Innendurchmesser des inneren Rings. Auf diese Weise wird insbesondere der innere Ring der Dichtung in der Art einer Labyrinthdichtung vor der Explosionsdruckwelle geschützt, weil der Ventileinsatz im geraden Weg der Explosionsdruckwelle zur Dichtung liegt.

Diese Ausführungsform kann dadurch verbessert werden, dass der Ventilstößel im geschlossenen Zustand des Entlüftungsventils mit einem Schutzfortsatz in den Ventileinsatz hineinragt. Hierdurch wird ein enger Spalt zwischen Ventileinsatz und Ventilstößel gebildet, der die Explosionsdruckwelle auf ihrem Weg zur Dichtung zusätzlich abbremst und diese somit vor Beschädigung schützt.

Weiter kann an der Außenumfangsfläche des Ventileinsatzes eine statische Dichtung vorzugsweise ein O-Ring vorgesehen sein. Diese Dichtung wird benötigt, damit die Brenngase, die unter hohem Druck in die Brennkammer eingefüllt werden, nicht an der Außenumfangsfläche des Ventileinsatzes vorbei entweichen können. Die bevorzugte Ausführungsform hat den Vorteil, dass ein Herausziehen des Ventileinsatzes beim Öffnen des Entlüftungsventils durch die hohe Haftreibung des Dichtungsgummis vermieden wird.

Die Erfindung wird im Folgenden anhand der beigefügten Zeichnung beschrieben werden. Es stellt dar:
- Fig. 1: einen Längsschnitt eines erfindungsgemäßen Entlüftungsventils einer thermischen Entgratanlage.

Das in Fig. 1 dargestellte Entlüftungsventil 10 kommt in einer thermischen Entgratanlage gemäß EP 1 232 822 A1 zum Einsatz und zwar als Ersatz für das Entlüftungsventil gemäß Fig. 5. Zum allgemeinen Aufbau der thermischen Entgratanlage wird daher auf diese Anmeldung verwiesen.

Das Entlüftungsventil 10 ist im Gehäuse 42 der Entgratkammer einbaut und über den Entlüftungsdurchgang 11 mit dieser verbunden. Die Achse A des Entlüftungsventils verläuft in Durchgangsrichtung D.

Das Entlüftungsventil 10 umfasst einen Ventilsitz 12 und einen Ventilstößel 20. Der Ventilstößel 20 ist mit einem vereinfacht dargestellten Aktuator 40, nämlich der Kolbenstange 45 eines einfachwirkenden Pneumatikzylinders, so verbunden, dass er in Richtung der Entlüftungsventilachse A bewegt werden kann. Bei der Schließbewegung des Entlüftungsventils 10 wird die Antriebskraft mittels Druckluft bereitgestellt, die über die Druckluftleitung 43 zugeführt wird. Die Rückstellkraft zum Öffnen des Entlüftungsventils 10 wird von der Rückstellfeder 44 erzeugt. Der Aktuator ist über einen ebenfalls vereinfacht dargestellten Bajonettverschluss 41 mit dem Gehäuse 42 der Entgratkammer lösbar verbunden.

Am Ventilstößel 20 ist eine Dichtung 23 angebracht, die in Kontakt mit dem Ventilsitz 12 bringbar ist. Der Ventilstößel bildet somit den Dichtungsträger 21. Die Dichtung wird von einem inneren Ring 24, einem äußeren Ring 25 und einem verformbaren Ringkern 26 gebildet, die in einer angepassten Ausnehmung 28 aufgenommen sind. Die beiden Ringe 24, 25 bestehen aus Messing oder nichtrostendem Stahl während der verformbare Ringkern 26 aus PTFE hergestellt ist. Beim Schließen des Entlüftungsventils 10 wird der verformbare Ringkern 26 allseitig mit Druck beaufschlagt, so dass er in die Verdrängungsausnehmungen 27 fließt, die an den beiden Ringen 24, 25 und am Ventilstößel 20 angebracht sind. Die Verdrängungsausnehmungen 27 sind in allen drei Fällen als umlaufende Nuten ausgeführt.

Am Ventilstößel 20 ist ein zylindrischer Schutzfortsatz 22 vorgesehen, an dessen Außenumfangsfläche der innere Ring 24 spielfrei angeordnet ist. Der Innendurchmesser des inneren Rings 24 ist gleich dem Innendurchmesser des zylindrischen Entlüftungsdurchgangs 11 ausgeführt.

Der Ventilsitz 12 wird von einem ringförmigen Ventileinsatz 13 gebildet, der einstückig als Drehteil aus Stahl hergestellt ist. Der Ventileinsatz 13 weist an der dem Ventilstößel zugewandten Stirnseite eine konvexe Dichtfläche 15 auf, die von einer inneren Kegelfläche 16 und einer äußeren Kegelfläche 17 gebildet wird, so dass sie spitz zuläuft. Die Spitze ist in der Verlängerung der Fügefläche zwischen innerem Ring 24 und Ringkern 26 angeordnet, damit sich eine unkomplizierte Stirnfläche des Ringkerns ergibt.

Der kleinste Innendurchmesser des Ventileinsatzes 13 ist kleiner als der Innendurchmesser des Entlüftungsdurchgangs 11. Dieser Innendurchmesser liegt nur entlang eines Abschnitts 18 am Ventileinsatz vor, so dass sich in Verbindung mit dem Schutzfortsatz 22 im geschlossenen Zustand des Entlüftungsventils 10 ein Dichtungslabyrinth ergibt.

An der Außenumfangsfläche des Ventileinsatzes 13 ist ein Gummi-O-Ring 14 vorgesehen, der in einer umlaufenden Nut unter Vorspannung eingebaut ist.

### Bezugszeichentiste

- D: Durchgangsrichtung
- A: Entlüftungsventilachse

- 10: Entlüftungsventil
- 11: Entlüftungsdurchgang
- 12: Ventilsitz
- 13: Ventileinsatz
- 14: O-Ring
- 15: Dichtfläche
- 16: innere Kegelfläche
- 17: äußere Kegelfläche
- 18: Abschnitt mit kleinstem Innendurchmesser

- 20: Ventilstößel
- 21: Dichtungsträger
- 22: Schutzfortsatz
- 23: Dichtung
- 24: innerer Ring
- 25: äußerer Ring
- 26: Ringkern
- 27: Verdrängungsausnehmung
- 28: Ausnehmung

- 40: Aktuator
- 41: Bajonettverschluss
- 42: Gehäuse der Entgratkammer
- 43: Druckluftleitung
- 44: Rückstellfeder
- 45: Kolbenstange

## Patentansprüche

1. Thermische Entgratanlage mit einer druckdicht verschließbaren Entgratkammer, die über einen mittels eines Entlüftungsventils (10) verschließbaren Entlüftungsdurchgang (11) mit einer Durchgangsrichtung (D) mit der Umgebung verbunden ist, wobei das Entlüftungsventil (10) einen feststehenden Ventilsitz (12), der den Entlüftungsdurchgang (11) umgibt, einen in Durchgangsrichtung (D) beweglichen Ventilstößel (20) und eine Dichtung (23) aufweist,
**dadurch gekennzeichnet, dass** die Dichtung (23) so am Ventilstößel (20) angebracht ist, dass die Fläche des Ventilstößels auf die ein Explosionsdruck aus der Entgratkammer einwirkt im Wesentlichen gleich der Querschnittschfläche des Entlüfungsdurchgangs ist.

2. Thermische Entgratanlage nach Anspruch 1,
**dadurch gekennzeichnet, dass** der Ventilstößel (20) von einem Aktuator (40) vorzugsweise einem einfach wirkenden Fluidzylinder antreibbar ist, wobei der Verbund aus Ventilstößel (20) und Aktuator (40) lösbar mit der Entgratkammer verbunden ist, vorzugsweise mittels eines Bajonettverschlusses (41).

3. Thermische Entgratanlage nach einem der vorstehenden Ansprüche,
**dadurch gekennzeichnet, dass** die Dichtung (23) von einem inneren Ring (24), einem äußeren Ring (25) und einem verformbaren Ringkern (26) gebildet wird, die in einer angepassten Ausnehmung (28) des Ventilstößels (20) aufgenommen sind, wobei die beiden Ringe (24; 25) so in Kontakt mit dem Ventilsitz (12) bringbar sind, dass der verformbare Ringkern (26) allseitig mit Druck beaufschlagt ist.

4. Thermische Entgratanlage nach Anspruch 3,
**dadurch gekennzeichnet, dass** wenigstens ein Ring (24; 25) und/oder der Ventilstößel (20) eine Verdrängungsausnehmung (27) für den verformbaren Ringkern (26) aufweist.

5. Thermische Entgratanlage nach Anspruch 4,
**dadurch gekennzeichnet, dass** die Verdrängungsausnehmung (27) als umlaufende Nut ausgebildet ist.

6. Thermische Entgratanlage nach einem der Ansprüche 3 bis 5,
**dadurch gekennzeichnet, dass** der Innendurchmesser des inneren Rings (24) im Wesentlichen gleich dem Innendurchmesser des Entlüftungsdurchgangs (11) ist.

7. Thermische Entgratanlage nach einem der vorherigen Ansprüche,
**dadurch gekennzeichnet, dass** der Ventilsitz (12) von einem ringförmigen Ventileinsatz (13) gebildet wird, an dessen Stirnfläche eine Dichtfläche (15) vorgesehen ist, die im Längsschnitt betrachtet konvex vorzugsweise spitz zulaufend ausgebildet ist.

8. Thermisch Entgratanlage nach Anspruch 7,
**dadurch gekennzeichnet, dass** der Innendurchmesser des Ventileinsatzes (13) abschnittsweise kleiner ist als der Innendurchmesser des inneren Rings (24).

9. Thermische Entgratanlage nach Anspruch 8,
**dadurch gekennzeichnet, dass** der Ventilstößel (20) im geschlossenen Zustand des Entlüftungsventils (10) mit einem Schutzfortsatz (22) in den Ventileinsatz (13) hineinragt.

10. Thermische Entgratanlage nach einem der Ansprüche 7 bis 9,
**dadurch gekennzeichnet, dass** an der Außenumfangsfläche des Ventileinsatzes (10) eine statische Dichtung vorzugsweise ein O-Ring (14) vorgesehen ist.

## Claims

1. Thermal deburring plant with a deburring chamber which is closable, pressure-tight, and which is connected to the surroundings via a venting passage (11) closable by means of a venting valve (10) and having a passage direction (D), the venting valve (10) having a stationary valve seat (12), which surrounds the venting passage (11), a valve tappet (20) movable in the passage direction (D) and a seal (23), **characterized in that** the seal (23) is attached to the valve tappet (20) such that the area of the valve tappet on which an explosive pressure from the deburring chamber acts is essentially equal to the cross-sectional area of the venting passage.

2. Thermal deburring plant according to Claim 1, **characterized in that** the valve tappet (20) is drivable by an actuator (40), preferably a single-acting fluid cylinder, the composite structure which consists of the valve tappet (20) and of the actuator (40) being connected releasably to the deburring chamber, preferably by means of a bayonet fastening (41).

3. Thermal deburring plant according to one of the preceding claims, **characterized in that** the seal (23) is formed by an inner ring (24), an outer ring (25) and a deformable annular core (26) which are received in an adapted recess (28) of the valve tappet (20), the two rings (24; 25) being capable of being brought into contact with the valve seat (12) such that the deformable annular core (26) is acted upon on all sides by pressure.

4. Thermal deburring plant according to Claim 3, **characterized in that** at least one ring (24; 25) and/or the valve tappet (20) have/has a displacement recess (27) for the deformable annular core (26).

5. Thermal deburring plant according to Claim 4, **characterized in that** the displacement recess (27) is designed as a continuous groove.

6. Thermal deburring plant according to one of Claims 3 to 5, **characterized in that** the inside diameter of the inner ring (24) is essentially equal to the inside diameter of the venting passage (11).

7. Thermal deburring plant according to one of the preceding claims, **characterized in that** the valve seat (12) is formed by an annular valve insert (13), on the end face of which is provided a sealing face (15) which, as seen in longitudinal section, is of convex, preferably tapering design.

8. Thermal deburring plant according to Claim 7, **characterized in that** the inside diameter of the valve insert (13) is in portions smaller than the inside diameter of the inner ring (24).

9. Thermal deburring plant according to Claim 8, **characterized in that** the valve tappet (20) projects with a protective extension (22) into the valve insert (13) when the venting valve (10) is in the closed state.

10. Thermal deburring plant according to one of Claims 7 to 9, **characterized in that** a static seal, preferably an O-ring (14), is provided on the outer circumferential face of the valve insert (10).

## Revendications

1. Installation d'ébarbage thermique comprenant une chambre d'ébarbage pouvant être fermée de manière étanche à la pression, qui est connectée à l'environnement par le biais d'un passage de désaérage (11) avec une direction de passage (D) et pouvant être fermé au moyen d'une soupape de désaérage (10), la soupape de désaérage (10) présentant un siège de soupape fixe (12) qui entoure le passage de désaérage (11), un poussoir de soupape (20) déplaçable dans la direction du passage (D) et un joint d'étanchéité (23),
**caractérisée en ce que** le joint d'étanchéité (23) est monté sur le poussoir de soupape (20) de telle sorte que la surface du poussoir de soupape sur laquelle agit une pression d'explosion provenant de la chambre d'ébarbage soit essentiellement identique à la surface en section transversale du passage de désaérage.

2. Installation d'ébarbage thermique selon la revendication 1,
**caractérisée en ce que** le poussoir de soupape (20) peut être entraîné par un actionneur (40) de préférence un cylindre de fluide agissant avec simple effet, l'assemblage du poussoir de soupape (20) et de l'actionneur (40) étant connecté de manière desserrable à la chambre d'ébarbage, de préférence au moyen d'une fermeture à baïonnette (41).

3. Installation d'ébarbage thermique selon l'une quelconque des revendications précédentes,
**caractérisée en ce que** le joint d'étanchéité (23) est formé par une bague interne (24), une bague externe (25) et un noyau annulaire déformable (26), lesquels sont reçus dans un évidement adapté (28) du poussoir de soupape (20), les deux bagues (24 ; 25) pouvant être amenées en contact avec le siège de soupape (12) de telle sorte que le noyau annulaire déformable (26) soit sollicité de tous les côtés par la pression.

4. Installation d'ébarbage thermique selon la revendication 3,
**caractérisée en ce**
**qu'**au moins une bague (24 ; 25) et/ou le poussoir de soupape (20) présente un évidement de refoulement (27) pour le noyau annulaire déformable (26).

5. Installation d'ébarbage thermique selon la revendication 4,
**caractérisée en ce que**
l'évidement de refoulement (27) est réalisé sous forme de rainure périphérique.

6. Installation d'ébarbage thermique selon l'une quelconque des revendications 3 à 5,
**caractérisée en ce que**
le diamètre intérieur de la bague interne (25) est essentiellement identique au diamètre intérieur du passage de désaérage (11).

7. Installation d'ébarbage thermique selon l'une quelconque des revendications précédentes,
**caractérisée en ce que**
le siège de soupape (12) est formé par un insert de soupape annulaire (13), sur la surface frontale duquel est prévue une surface d'étanchéité (15) qui est réalisée, vue en coupe longitudinale, en se terminant de manière convexe ou en pointe.

8. Installation d'ébarbage thermique selon la revendication 7,
**caractérisée en ce que** le diamètre intérieur de l'insert de soupape (13) est plus petit par portions que le diamètre intérieur de la bague interne (24).

9. Installation d'ébarbage thermique selon la revendication 8,
**caractérisée en ce que**
le poussoir de soupape (20) pénètre dans l'état fermé de la soupape de désaérage (10) avec une saillie de protection (22) dans l'insert de soupape (13).

10. Installation d'ébarbage thermique selon l'une quelconque des revendications 7 à 9,
**caractérisée en ce que**
l'on prévoit sur la surface périphérique extérieure de l'insert de soupape (10) un joint d'étanchéité statique, de préférence un joint torique (14).
